# EUROPÄISCHE PATENTSCHRIFT

(11) **EP 2 100 827 B1**
(45) Veröffentlichungstag und Bekanntmachung des Hinweises auf die Patenterteilung: **23.05.2012**
(21) Anmeldenummer: 09154390.0
(22) Anmeldetag: 05.03.2009
(51) Int. Cl.: B65G 17/08, B65G 17/40

(54) **Förderband zum Bewegen von Fahrzeugen in einer Fahrzeugbehandlungsanlage**
Supply belt for moving vehicles in a vehicle processing assembly
Bande de transport destinée à déplacer des véhicules automobiles dans une installation de traitement de véhicules

(30) Priorität: 13.03.2008 DE 102008014072
(43) Veröffentlichungstag der Anmeldung: 16.09.2009
(73) Patentinhaber: Otto Christ AG, 87700 Memmingen (DE)
(72) Erfinder: Christ, Markus, 87700, Memmingen (DE)
(74) Vertreter: Isarpatent

(56) Entgegenhaltungen:
- EP-A- 1 241 116
- DE-A1- 2 017 089

## Beschreibung

Die vorliegende Erfindung bezieht sich auf ein Förderband zum Bewegen von Fahrzeugen in einer Fahrzeugbehandlungsanlage, sowie auf eine Fahrzeugbehandlungsanlage mit einem derartigen Förderband.

Obwohl auf beliebige Fahrzeugbehandlungsanlagen anwendbar, werden die vorliegende Erfindung sowie die ihr zugrundeliegende Problematik in Bezug auf eine Autowaschanlage näher erläutert. Dies ist allerdings nicht als abschließend zu verstehen, da der Gegenstand der vorliegenden Erfindung beispielsweise auch auf Fahrzeugwartungsanlagen, Fahrzeugfertigungsanlagen, Polieranlagen oder dergleichen übertragbar ist.

Es sind Autowaschanlagen als sogenannte Waschstraßen von einem Durchfahr-Typ bekannt, bei welchen ein zu waschendes Fahrzeug in die Autowaschanlage von der Vorderseite eintritt und nach Beendigung des Waschens die Autowaschanlage an der Rückseite verlässt. Dabei ist die Autowaschanlage im Allgemeinen innen mit einem Waschabschnitt, einem Wachsabschnitt und einem Trocknungsabschnitt, angeordnet in dieser Reihenfolge von der Vorderseite zur Rückseite, ausgestaltet. Der Waschabschnitt ist beispielsweise ausgestattet mit Waschbürsten zum Waschen der Oberfläche des Fahrzeugs, einer Sprüheinrichtung zum Sprühen von Waschwasser und einem Reinigungsmittel auf die Oberfläche des Fahrzeugs, etc. Der Wachsabschnitt ist ausgestattet mit einer Sprüheinrichtung zum Sprühen eines Flüssigwachses auf die Oberfläche des Fahrzeugs und mit Wachsbürsten oder dergleichen. Der Trocknungsabschnitt schließlich ist beispielsweise ausgestattet mit Trocknungsdüsen zum Blasen von Luft gegen die Oberfläche des zu trocknenden Fahrzeuges.

Es ist bekannt, ein zu waschendes Fahrzeug mittels einer Fördereinrichtung durch die Autowaschanlage zu befördern und das Fahrzeug durch die oben genannten Stationen in definierter Weise hindurch zu transportieren.

Es ist ferner bekannt, am Boden Leitschienen paarweise anzuordnen, zwischen die das Fahrzeug mit seinen Rädern eingefahren werden muss. Zwischen diesen Leitschienenpaaren werden mit Hilfe von endlos geführten Schleppketten im Abstand zueinander befindliche Mitnehmerrollen hindurchgeführt. Die Mitnehmerrollen entsprechen etwa der Breite des Abstandes der beiden Schleppketten, welche zwischen den Leitschienenpaaren laufen, wobei der Abstand größer als die größte Breite eines Fahrzeugrades gehalten ist, so dass dadurch ein einwandfreier Transport des Fahrzeuges gewährleistet wird. Dabei ist es üblich, dass nur ein Rad auf einer Seite des Fahrzeuges von den Mitnehmerrollen geschoben wird. Dabei sind die Lenkräder auf dieser Seite des Fahrzeugs zum Verhindern eines Herauslaufens durch die fest in der Anlage montierten Leitschienen gesichert. Eine derartige Fördereinrichtung ist beispielsweise in der DE 20 17 089 beschrieben.

An diesem Ansatz hat sich jedoch die Tatsache als nachteilig herausgestellt, dass die Fahrzeugräder an den fest montierten Leitschienen reiben und so Beschädigungen der Räder und/oder der Leitschienen verursachen können und einen erheblichen Reibwiderstand darstellen, der den Transport nachteilig beeinflussen kann. Ferner hat sich an diesem Ansatz die Tatsache als nachteilig herausgestellt, dass Personen während des Umlaufes der Schleppketten aus Versehen in die Führungsspur zwischen den Leitschienen eintreten, ohne an die darin geführten Mitnehmerrollen zu denken. Dies kann beispielsweise dann der Fall sein, wenn Personen sich in unberechtigter weise in der Autowaschstraße aufhalten oder Wartungspersonal Kontrollen ausführt. Da die Mitnehmerrollen einen gewissen Abstand am Boden besitzen, kann es solchen Fällen zu erheblichen Verletzungen kommen, wenn der Fuß zwischen dem Boden und der Mitnehmerrolle eingeklemmt wird.

In diesem Sinne vorteilhaft haben sich Fördereinrichtungen herausgestellt, welche als sogenannte Plattenbandförderer ausgebildet sind. Beispielsweise beschreibt die EP 1 241 116 B1 einen Plattenbandförderer zum Bewegen von Fahrzeugen in Fahrzeugwaschanlagen gemäss dem Oberbegriff des Anspruchs 1, der aus mehreren gelenkig aneinander gelagerten Platten besteht, die eine umlaufende Förderkette bilden.

An diesem Ansatz hat sich jedoch die Tatsache als nachteilig herausgestellt, dass die Fahrzeugräder während der Beförderung des Fahrzeugs durch die Waschanlage hindurch, beispielsweise bei ungewollter Schrägausrichtung der Lenkräder, von dem Förderband laufen können, was ein Sicherheitsrisiko für sich in der Waschanlage befindliche Personen darstellt sowie Beschädigungen an dem Fahrzeug und/oder der Waschanlage hervorrufen kann.

Es ist auch bekannt, das Förderband begrenzende und fest in der Waschanlage montierte Leitschienen vorzusehen und derart zu erhöhen, dass diese eine Führung für die Fahrzeugräder darstellen.

An diesem Ansatz hat sich jedoch die Tatsache als nachteilig herausgestellt, dass diese Art der Laufbegrenzung bei Fahrzeugen mit einer niedrigen Unterbodenhöhe Beschädigungen verursachen kann. Des Weiteren ist an diesem Ansatz nachteilig, dass die die Begrenzung darstellenden Leitschienen im Falle eines

Kontaktes mit den zu führenden Rädern einen hohen Reibwiderstand hervorrufen, der zum einen die Beförderung nachteilig beeinflussen und eventuell sogar Beschädigungen an den Fahrzeugrädern oder dem Fahrzeug selbst hervorrufen kann.

Somit liegt der vorliegenden Erfindung die Aufgabe zugrunde, die oben genannten Nachteile zu beseitigen und insbesondere ein Fördereinrichtung bereitzustellen, welche einen sicheren und schadlosen Transport des Fahrzeugs durch die Autowaschanlage hindurch in definierter Weise gewährleistet.

Diese Aufgabe wird erfindungsgemäß durch das Förderband mit den Merkmalen des Patentanspruchs 1 beziehungsweise die Fahrzeugbehandlungsanlage mit den Merkmalen des Patentanspruchs 14 gelöst.

Die der vorliegenden Erfindung zugrundeliegende Idee besteht darin, dass das Förderband mehrere Förderplatten aufweist, welche in Förderrichtung aufeinanderfolgend angeordnet sind, wobei zumindest vorbestimmte Förderplatten jeweils mindestens einen seitlichen und sich in etwa senkrecht zur Förderbandlängsrichtung und in etwa senkrecht zur Förderbandquerrichtung erstreckenden Anlagevorsprung als Fahrzeuglaufbegrenzung aufweisen, der fest an dem jeweiligen Randbereich des Förderbandes angebracht ist.

Erfindungsgemäß ist demnach eine Fahrzeuglaufbegrenzung in Form von Anlagevorsprüngen direkt mit den einzelnen Förderplatten des Förderbandes gekoppelt derart, dass eine Relativbewegung zwischen Fahrzeuglaufbegrenzung und Fahrzeugrädern im Gegensatz zum Stand der Technik vorteilhaft vermieden wird. Die genaue Positionierung, Anzahl sowie Form der Anlagevorsprünge kann entsprechend der jeweiligen Verwendungsart variiert und demnach in geeigneter Weise ausgewählt werden.

In den Unteransprüchen finden sich vorteilhafte Ausgestaltungen und Verbesserungen des im Patentanspruch 1 angegebenen Förderbandes.

Gemäß einer bevorzugten weiterbildung weisen die vorbestimmten Förderplatten jeweils in beiden Randbereichen einen derartigen Vorsprung auf. Dadurch wird eine Fahrzeuglaufbegrenzung in beiden seitlichen Richtungen des Förderbandes gewährleistet. Die Förderplatten, an welchen derartige Vorsprünge vorgesehen sind, können beispielsweise in Abhängigkeit der auf dem Förderband montierten Mitnehmer gewählt werden.

Gemäß einem bevorzugten Ausführungsbeispiel der vorliegenden Erfindung weist jede Förderplatte mindestens einen derartigen seitlichen Vorsprung auf, wobei insbesondere bevorzugt jede Förderplatte in beiden Randbereichen gerade einen derartigen Vorsprung umfasst. Dadurch ist eine optimale Fahrzeuglaufbegrenzung für beiden Seitenbereiche des Förderbandes gewährleistet, unabhängig von der Positionierung des Fahrzeugs auf dem Förderband.

Gemäß einer weiteren bevorzugten Weiterbildung ist jede Förderplatte einteilig mit den entsprechend zugeordneten vorsprüngen ausgebildet, beispielsweise mittels eines Spritzgussverfahrens oder dergleichen. Dadurch wird ein einfaches und kostengünstiges Herstellungsverfahren zum Herstellen eines Förderbandes mit integrierter Fahrzeuglaufbegrenzung geschaffen.

Die Vorsprünge sind jeweils in etwa keilförmig mit einer Grundfläche und zwei zusammenlaufenden Seitenflächen ausgebildet. Derartige keilförmige Vorsprünge sind in einem Spritzgusswerkzeug einfach formbar und bieten eine schonende Laufbegrenzung für die jeweiligen Fahrzeugräder. Dabei ist vorteilhaft die Grundfläche jedes Vorsprungs sich in Förderbandlängsrichtung erstreckend an dem jeweils zugeordneten Randbereich der zugeordneten Förderplatte angebracht. Die beiden Seitenflächen jedes Vorsprungs laufen gemäß einem Ausführungsbeispiel der vorliegenden Erfindung zum Bilden einer Keilspitze unter einem spitzen Winkel von der Grundfläche aus zusammen, wobei die Keilspitze und vorzugsweise alle weiteren Ränder beziehungsweise Kanten zum Schutze der Fahrzeugräder und/oder des Fahrzeugs abgerundet ausgebildet sind.

Gemäß einem weiteren bevorzugten Ausführungsbeispiel ist die zur Förderband-Außenseite weisende Seitenfläche jedes Vorsprungs als in etwa zu der zugeordneten Förderplatte senkrecht ausgerichtete Fläche und die zur Förderband-Innenseite weisende Seitenfläche jedes Vorsprungs als zu der zugeordneten Förderplatte schräg in Richtung zur Außenseite hin verlaufende Fläche ausgebildet. Dadurch kann zum einen eine einfache Spritzgussform verwendet werden und zum anderen stellt die zur Förderband-Innenseite hin weisende Seitenfläche jedes Vorsprungs aufgrund der Schräge eine an die Form der zu begrenzenden Räder angepasste Neigung beziehungsweise Ausgestaltung dar. Der Winkel zwischen den beiden Seitenflächen jedes Vorsprungs beträgt beispielsweise in etwa zwischen 5° und 20°, vorteilhaft zwischen 10° und 15°.

Vorteilhaft weisen die Vorsprünge jeweils von der Grundfläche zu der Keilspitze hin schräg verlaufende Stirnseiten derart auf, dass die Vorsprünge von der Grundfläche zu der Keilspitze verjüngt zulaufend ausgebildet sind.

Die Vorsprünge weisen beispielsweise jeweils eine Breite von etwa 30 mm bis 40 mm, insbesondere 36 mm, eine Höhe von in etwa 35 mm bis 45 mm, insbesondere 39 mm und eine maximale Tiefe von in etwa 15 mm bis 25 mm, insbesondere 19 mm auf. Es ist für einen Fachmann offensichtlich, dass die Anzahl, Anordnung sowie genauen geometrischen Abmessungen der Vorsprünge beliebig modifizierbar sind, solange eine geeignete Fahrzeuglaufbegrenzung durch Anbringung der Vorsprünge direkt auf dem Förderband gewährleistet ist. Daher sind diese angegebenen Werte der Vorsprünge lediglich als beispielhafte Ausgestaltung und nicht beschränkend zu verstehen.

Gemäß einer weiteren bevorzugten Weiterbildung ist die zur Förderband-Außenseite weisende Seitenfläche jedes Vorsprungs in etwa bündig mit der zugeordneten Stirnseite der zugeordneten Förderplatte ausgebildet. Dies ist für die Breitenausnutzung des Förderbandes sowie ebenfalls für das Herstellungsverfahren vorteilhaft, da eine vereinfachte Spritzgussform Verwendung finden kann.

Jede Förderplatte weist einen Trägerabschnitt und daran angeformte Verbindungsabschnitte für eine Verbindung mit benachbarten Förderplatten auf. Die Vorsprünge erstrecken sich vorzugsweise jeweils in Förderrichtung annähernd über die gesamte Breite des Trägerabschnitts der zugeordneten Trägerplatte. Dadurch ist eine optimalen Fahrzeuglaufbegrenzung mit möglichst geringen Zwischenräumen zwischen den einzelnen Vorsprüngen gewährleistet, da die Vorsprünge lediglich über die Länge der Verbindungsabschnitte der Trägerplatten voneinander beabstandet sind.

Nach einem weiteren bevorzugten Ausführungsbeispiel setzen sich die Förderplatten jeweils aus einzelnen Plattenabschnitten zusammen, wobei dadurch ein Förderband mit einer gewünschten Breite nach dem Baukastenprinzip zusammengesetzt werden kann.

Vorteilhaft sind die Förderplatten zum Bilden eines endlosen Förderbandes gelenkig miteinander verbunden. Dadurch wird eine optimale Fördermenge von Fahrzeugen durch die Waschanlage hindurch unterstützt.

Gemäß einem weiteren bevorzugten Ausführungsbeispiel weisen vorbestimmte Förderplatten Fahrzeugradmitnehmer auf, welche fest oder lösbar auf der jeweils zugeordneten Förderplatte anbringbar sind. Beispielsweise weist das Förderband eine Breite von in etwa 380 mm bis 420 mm, insbesondere von etwa 400 mm auf. Die Breite kann allerdings an den jeweiligen Anwendungsfall angepasst werden.

Nach einer weiteren bevorzugten Ausgestaltung sind die Förderplatten und/oder die Vorsprünge aus einem geeigneten Kunststoff hergestellt, so dass eine einfache und kostengünstige Herstellung mittels eines Spritzgussverfahrens möglich ist.

Die Erfindung wird im Folgenden anhand von Ausführungsbeispielen unter Bezugnahme auf die beiliegenden Figuren der Zeichnung näher erläutert.

Von den Figuren zeigen:
- Fig. 1: eine perspektivische Ansicht eines Plattenförderers in Teildarstellung gemäß einem bevorzugten Ausfüh- rungsbeispiel der vorliegenden Erfindung;
- Fig. 2: eine perspektivische Ansicht eines Förderbandes in Teildarstellung gemäß einem bevorzugten Ausführungs- beispiel der vorliegenden Erfindung;
- Fig. 3: eine perspektivische Ansicht einer Mitnehmer aufwei- senden Förderplatte gemäß einem bevorzugten Ausfüh- rungsbeispiel der vorliegenden Erfindung; und
- Fig. 4: eine Vorderansicht der Förderplatte aus Fig. 3.

In den Figuren der Zeichnung bezeichnen gleiche Bezugszeichen gleiche oder funktionsgleiche Komponenten, soweit nichts Gegenteiliges angegeben ist.

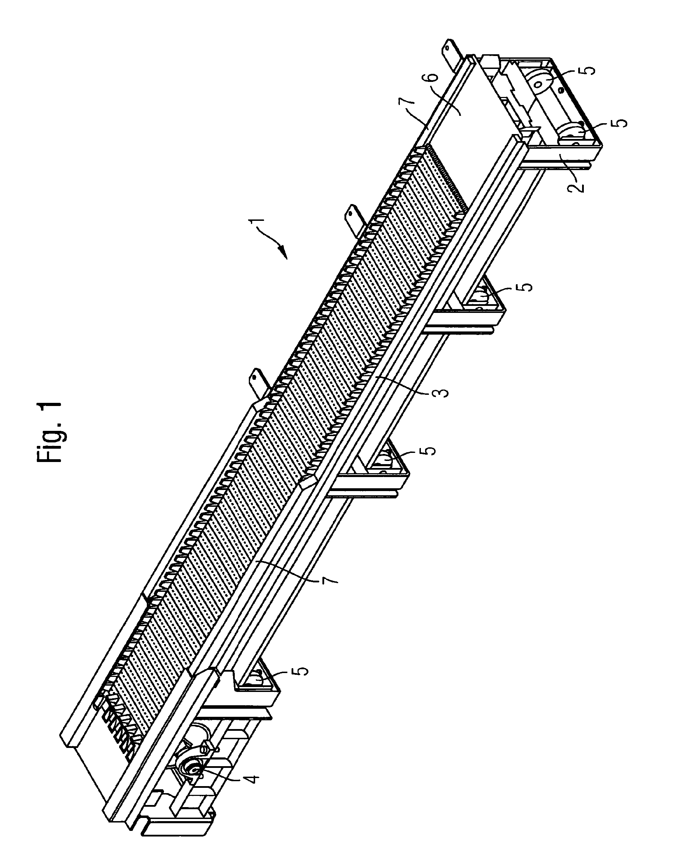

Fig. 1 illustriert einen exemplarischen Plattenförderer 1 in perspektivischer Ansicht, wobei der Übersichtlichkeit halber der Plattenförderer 1 lediglich in Teilansicht dargestellt ist. Der Plattenförderer 1 gemäß dem vorliegenden Ausführungsbeispiel besteht vorzugsweise aus einem Gestell 2, einem vorzugsweise endlosen Förderband 3, welches in Fig. 1 lediglich ausschnittsweise dargestellt ist, einem Antrieb 4, welcher das Förderband 3 in Bewegung setzt, sowie Umlenkrollen 5, über welche das Förderband 3 geführt und zumindest an einer Stelle auch angetrieben wird.

Das Gestell 2 ist mit einer Förderebene 6 ausgebildet, auf welcher sich das Förderband 3 am Gestell 2 abstützt. Ferner weist das Gestell 2 seitliche Leisten 7 auf, welche in Längsrichtung des Plattenförderers 1 gesehen an den Seitenbereichen der Förderebene 6 angebracht sind und eine Aufnahmebegrenzung bei der Aufnahme des Förderbandes 3 derart darstellen, dass das Förderband 3 in vorbestimmter weise über die Förderebene 6 geführt wird.

Der Plattenförderer 1 ist vorliegend nicht als vollständig dargestellt und beschrieben anzusehen, jedoch können weitere Details des Plattenförderers 1 zur Beschreibung des vorliegenden Anmeldungsgegenstandes der Übersichtlichkeit halber weggelassen werden.

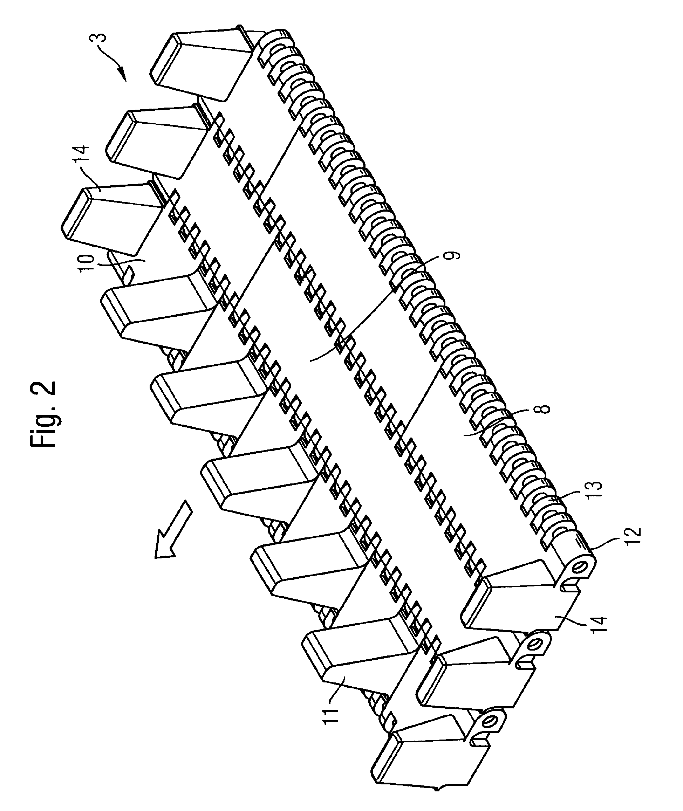

Fig. 2 illustriert eine Perspektivansicht eines Ausschnitts eines Förderbandes 3 gemäß einem bevorzugten Ausführungsbeispiel der vorliegenden Erfindung, wobei in Fig. 2 der Übersichtlichkeit halber drei miteinander verbundene Förderplatten 8, 9 10 exemplarisch illustriert sind. Die Förderrichtung ist in Fig. 2 durch den dargestellten Pfeil angegeben.

Wie in Fig. 2 ersichtlich ist, setzt sich das Förderband 3 aus in Förderrichtung aufeinanderfolgend angeordneten Förderplatten 8, 9, 10 zusammen. Dabei sind im Wesentlichen zwei Arten von Förderplatten vorgesehen, wobei die erste Art aus einer Förderplatte 8, 9 ohne aufgebrachten Mitnehmern und die zweite Art als Förderplatte 10 mit integrierten Mitnehmern 11 ausgebildet ist.

Beispielsweise sind die einzelnen Förderplatten 8, 9, 10 aus einzelnen Plattenabschnitten zusammengesetzt, um einen modularen Aufbau zu gewährleisten. Folglich können trotz Einheitsfertigung von bestimmten Plattenabschnitten Plattenförderer mit unterschiedlichen Breiten, jeweils dem entsprechenden Verwendungszweck angepasst, gebildet werden. Ein modularer Aufbau erleichtert zudem die Wartung und den Austausch etwaiger beschädigter Plattenabschnitte.

Wie oben bereits erläutert, kann das Förderband 3 mit an den jeweiligen Anwendungsfall angepasster Breite aufgrund der modularen Bauweise ausgeführt werden, wobei in Autowaschanlagen eine Breite von in etwa 380 mm bis 420 mm und am vorteilhaftesten eine Breite von in etwa 400 mm sein kann.

Die Förderplatten 8, 9 der ersten Art unterscheiden sich von den Förderplatten 10 der zweiten Art lediglich darin, dass in vorbestimmten Abständen Mitnehmer 11 in der Förderplatte 10 integriert sind. Die Mitnehmer 11 dienen einem Hintergreifen eines zugeordneten Fahrzeugrades zum Führen des Fahrzeugs auf dem Förderband 3 durch die Waschanlage hindurch. Die Mitnehmer 11 können beispielsweise fest an der Förderplatte 10 oder lösbar an dieser angebracht sein.

Vorzugsweise sind die Förderplatten 8, 9, 10 jeweils als Kunststoffteile ausgebildet und mittels eines geeigneten Spritzgussverfahrens hergestellt. Dies schließt allerdings nicht aus, dass die Förderplatten 8, 9, 10 auch aus anderen Materialien wie beispielsweise Leichtmetall, insbesondere als Aluminium-Gussteile, hergestellt sind.

Die einzelnen aneinandergereihten Förderplatten 8, 9, 10 weisen vorzugsweise jeweils einen Trägerabschnitt 12 sowie einen Verbindungsabschnitt 13 auf, über welchen die einzelnen Förderplatten 8, 9, 10 mit jeweils benachbarten Förderplatten über entsprechend zugeordnete Gelenkzapfen verbindbar sind. Dadurch kann in modularer Bauweise ein Endlosförderband 3 hergestellt werden, welches in einen Plattenförderer 1 wie in Fig. 1 exemplarisch in Teilansicht dargestellt, integriert werden kann.

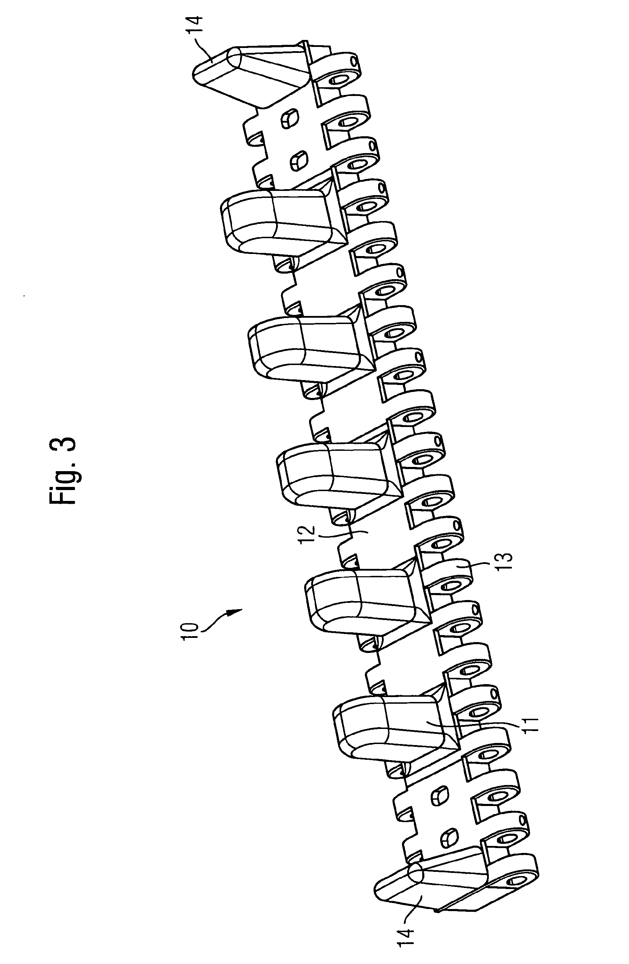

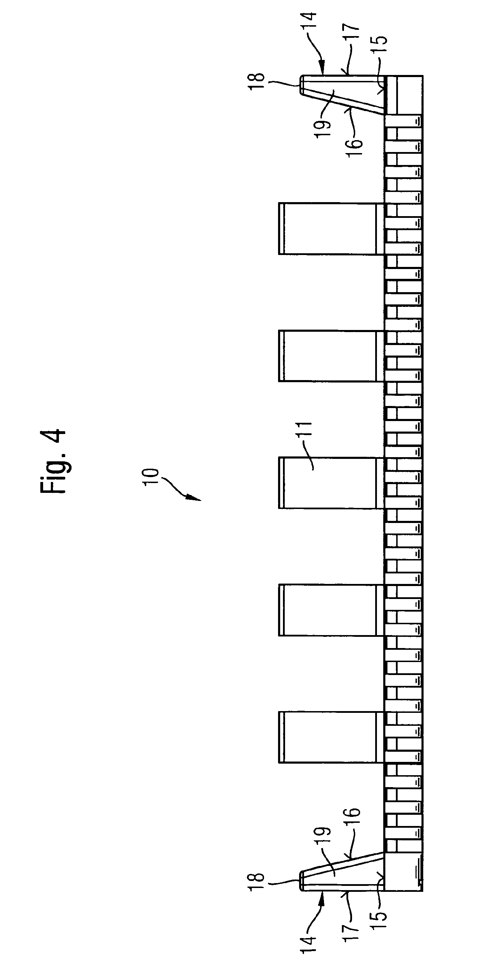

Des Weiteren weist gemäß dem vorliegenden Ausführungsbeispiel jede Förderplatte 8, 9, 10 in beiden Randbereichen einen Anlagevorsprung 14 auf, welcher einer Fahrzeuglaufbegrenzung dient und im Folgenden unter Bezugnahme auf die Figuren 3 und 4 detaillierter beschrieben wird.

Fig. 3 illustriert in perspektivischer Ansicht eine Förderplatte 10 und Fig. 4 eine Vorderansicht der Förderplatte 10 aus Fig. 3 gemäß der oben beschriebenen zweiten Art mit Mitnehmern 11, wobei die nachfolgenden Erläuterungen hinsichtlich der Anlagevorsprünge 14 auch auf die Förderplatten 8, 9 der ersten Art in analoger Weise übertragbar sind. Im Falle der Förderplatte 10 gemäß Fig. 3 dient der Trägerabschnitt 12 einem Tragen der Mitnehmer 11 sowie der Anlagevorsprünge 14, wohingegen der Trägerabschnitt 12 der Förderplatten 8, 9 einem Tragen des zugeordneten Fahrzeugrades und der Anlagevorsprünge 14 dient.

Wie in den Figuren 3 und 4 dargestellt ist, weist jede Förderplatte 10 (und gleichsam jede Förderplatte 8, 9) vorzugsweise in jedem Randbereich einen Anlagevorsprung 14 auf. Vorzugsweise sind die Anlagevorsprünge 14 einteilig mit den jeweils zugeordneten Plattenabschnitten der Förderplatte 10 ausgebildet, beispielsweise mittels eines gemeinsamen Spritzgussverfahrens. Allerdings ist es auch vorstellbar, dass die Anlagevorsprünge 14 lösbar in den Randbereichen der jeweiligen Förderplatte 10 vorgesehen sind.

Es sei an dieser Stelle nochmals angemerkt, dass die in den Figuren 1 bis 4 und dem vorliegenden Ausführungsbeispiel beschriebenen Anlagevorsprünge 14 lediglich exemplarisch in ihrer Anzahl, Anordnung sowie geometrischen Abmessungen dargestellt sind. Es ist für einen Fachmann offensichtlich, dass die Anlagevorsprünge 14 auch andersartig ausgestaltet sein können, wie beispielsweise als halbkreisförmige Anlagevorsprünge, und nicht zwangsläufig in beiden Seitenbereichen jeder Förderplatte vorgesehen sein müssen. Es ist auch vorstellbar, dass die aufeinanderfolgenden Förderplatten wechselseitig lediglich in einem Randbereich die Anlagevorsprünge 14 aufweisen, dass in den Randbereichen nicht lediglich ein Anlagevorsprung 14, sondern mehrere nebeneinander vorgesehene Anlagevorsprünge je Förderplatte vorgesehen sind oder dass in regelmäßiger Anordnung lediglich vorbestimmte Förderplatten in einem Seitenbereich oder in beiden Seitenbereichen ein oder mehrere Anlagevorsprünge mit einheitlicher geometrischer Abmessung oder mit unterschiedlichen Abmessungen aufweisen. Entscheidend ist lediglich, dass die Anlagevorsprünge 14 auf vorbestimmten Förderplatten derart angebracht sind, dass sich die Anlagevorsprünge 14 mit dem Förderband mitbewegen, dass die Anlagevorsprünge 14 eine geeignete Fahrzeuglaufbegrenzung darstellen und dass eine Relativbewegung zwischen Förderband und Anlagevorsprung nicht weiter gegeben ist. Auch ist auch vorstellbar, dass die Anlagevorsprünge 14 lediglich in den entsprechend zu den Mitnehmern benachbarten Förderplatten vorgesehen sind, welche die Fahrzeugräder tragen und führen.

Gemäß dem vorliegenden Ausführungsbeispiel nach den Figuren 1 bis 4 sind die Anlagevorsprünge 14 als in etwa keilförmige Vorsprünge mit einer Grundfläche 15 und zwei zusammenlaufenden Seitenflächen 16, 17 ausgebildet, wobei alle Ränder und Kanten vorteilhaft zum Schutze der geführten Fahrzeugreifen abgerundet sind. Die zusammenlaufenden Seitenflächen 16, 17 bilden eine Keilspitze, ebenfalls in abgerundeter Form, wie in Fig. 3 ersichtlich ist.

Die Grundfläche 15 jedes Anlagevorsprungs 14 ist gemäß dem vorliegenden Ausführungsbeispiel derart einteilig in dem jeweils zugeordneten Randbereich der zugeordneten Förderplatte 10 in Förderrichtung angeformt, dass sich die Grundfläche 15 annähernd über die gesamte Breite des Trägerabschnitts 12 der entsprechenden Förderplatte 10 erstreckt. Des Weiteren ist vorzugsweise, wie in Fig. 4 ersichtlich, die zur Förderband-Außenseite hin weisende Seitenfläche 17 jedes Anlagevorsprungs 14 als senkrechte und bündig mit der Stirnseite des jeweiligen Förderplatten-Randbereiches abschließende Fläche ausgebildet. Dies erleichtert die Herstellung des erfindungsgemäßen Förderbandes in einem Werkzeug.

Die zur Förderband-Innenseite hin weisende Seitenfläche 16 jedes Anlagevorsprungs 14 ist von dem Trägerabschnitt 12 der jeweils zugeordneten Förderplatte ausgehend derart schräg verlaufend zu der gegenüberliegenden Seitenfläche 17 geformt, dass eine vorzugsweise runde Keilspitze 18 entsteht. Die Neigung der Seitenfläche 16 ist vorzugsweise an die Form der zu begrenzenden Fahrzeugreifen angepasst und besitzt beispielsweise einen Neigungswinkel zwischen in etwa 5° und 20°, vorzugsweise zwischen 10° und 15°, bezogen auf die gegenüberliegende Seitenfläche 17. Des Weiteren können auch die entsprechenden Stirnseiten 19 jedes Anlagevorsprungs 14 unter einem vorbestimmten Winkel schräg verlaufend zur Bildung einer verjüngten Keilspitze 18 ausgebildet sein.

Die einzelnen Anlagevorsprünge 14 sind im vorliegenden Ausführungsbeispiel in etwa über die Breite der jeweiligen Verbindungsabschnitte 13 der entsprechenden Förderplatten voneinander beabstandet und gewährleisten aufgrund der Anbringung auf jeweils einer Förderplatte das Umlenken der einzelnen Förderplatten 8, 9, 10 um die zugeordneten Umlenkrollen 5 im Falle eines Endlosförderbandes 3.

Im Folgenden wird ein Beispiel für die Abmessungen der Anlagevorsprünge 14 wiedergegeben, wobei für einen Fachmann, wie oben bereits erläutert, offensichtlich ist, dass diese geometrischen Abmessungen beliebig modifizierbar sind in Abhängigkeit des jeweiligen Anwendungsfalls. Gemäß dem folgenden Ausführungsbeispiel weisen die Anlagevorsprünge 14 jeweils eine Breite von in etwa 30 mm bis 40 mm, insbesondere 36 mm, eine Höhe von in etwa 35 mm bis 45 mm, insbesondere 39 mm und eine maximale Tiefe von in etwa 15 mm bis 25 mm im Bereich der Grundfläche 15 auf.

Obwohl die vorliegende Erfindung anhand bevorzugter Ausführungsbeispiele vorstehend beschrieben wurde, ist sie darauf nicht beschränkt, sondern auf vielfältige Weise modifizierbar. Insbesondere können die angegebenen Beispiele beliebig untereinander ausgetauscht und miteinander kombiniert werden und die angegebenen Abmessungen, Anordnungen und Herstellungen der Anlagevorsprünge können dem jeweiligen Anwendungsfall entsprechend abgeändert werden.

Beispielsweise können die Anlagevorsprünge in Richtung zur Förderband-Innenseite gerichtet um einen nahe der Grundfläche angeordneten Kippbereich kippbar ausgebildet sein, so dass ein Fahrzeugrad, welches sich aus welchem Grunde auch immer außerhalb des Förderbandes befindet, auf einfache und schadlose Weise in die Förderebene zurückgeführt werden kann. Hingegen sind die Anlagevorsprünge in diesem Fall in Richtung zur Förderband-Außenseite hin vorzugsweise steif und nicht verkippbar ausgestaltet, um gerade die gewünschte Fahrzeuglaufbegrenzung bieten zu können.

Auch sind andere Herstellungsverfahren zur Herstellung der Förderplatten und der Anlagevorsprünge in einteiliger Form denkbar. Die Anlagevorsprünge können auch in nicht einteiliger Form und/oder lösbar an den jeweils zugeordneten Förderplatten angebracht sein.

### Bezugszeichenliste

- 1: Plattenförderer
- 2: Gestell
- 3: Förderband
- 4: Antrieb
- 5: Umlenkrollen
- 6: Förderebene
- 7: Leisten
- 8: Förderplatte
- 9: Förderplatte
- 10: Förderplatte
- 11: Mitnehmer
- 12: Trägerabschnitt
- 13: Verbindungsabschnitt
- 14: Anlagevorsprung
- 15: Grundfläche
- 16: Seitenfläche
- 17: Seitenfläche
- 18: Keilspitze
- 19: Stirnseiten

## Patentansprüche

1. Förderband (3) zum Bewegen von Fahrzeugen in einer Fahrzeugbehandlungsanlage, insbesondere einer Fahrzeugwaschanlage, mit mehreren Förderplatten (8, 9, 10), welche in Förderrichtung aufeinanderfolgend angeordnet sind; wobei zumindest vorbestimmte Förderplatten (8, 9, 10) mindestens einen seitlichen, sich in etwa senkrecht zur Förderbandlängsrichtung und in etwa senkrecht zur Förderbandquerrichtung erstreckenden Anlagevorsprung (14) als Fahrzeuglaufbegrenzung aufweisen;
wobei die Anlagevorsprünge (14) jeweils in etwa keilförmig mit einer Grundfläche (15) und zwei zusammenlaufenden Seitenflächen (16, 17) ausgebildet sind;
wobei jede Förderplatte (8, 9, 10) einen Trägerabschnitt (12) und daran angeformte Verbindungsabschnitte (13) für eine Verbindung mit benachbarten Förderplatten aufweist;
**dadurch gekennzeichnet, dass** benachbarte Anlagevorsprünge (14) zumindest über die Breite der Verbindungsabschnitte (13) der entsprechenden Trägerplatten (8, 9, 10) in Förderrichtung voneinander beabstandet sind.

2. Förderband nach Anspruch 1,
**dadurch gekennzeichnet,**
**dass** die vorbestimmten Förderplatten (8, 9, 10) jeweils in beiden Randbereichen mindestens einen Anlagevorsprung (14) aufweisen.

3. Förderband nach Anspruch 1 oder 2,
**dadurch gekennzeichnet,**
**dass** jede Förderplatte (8, 9, 10) zumindest in einem Randbereich, vorzugsweise in beiden Randbereichen, jeweils mindestens einen, vorzugsweise genau einen Anlagevorsprung (14) aufweist.

4. Förderband nach einem der vorhergehenden Ansprüche,
**dadurch gekennzeichnet,**
**dass** die Förderplatten (8, 9, 10) jeweils einteilig mit den entsprechend zugeordneten Anlagevorsprüngen (14) ausgebildet sind, beispielsweise mittels eines Spritzgussverfahrens.

5. Förderband nach einem der vorangehenden Ansprüche,
**dadurch gekennzeichnet,**
**dass** die Grundfläche (15) jedes Anlagevorsprungs (14) sich in Förderbandlängsrichtung erstreckend an dem jeweils zugeordneten Randbereich der zugeordneten Förderplatte (8, 9, 10) angebracht ist.

6. Förderband nach einem der vorangehenden Ansprüche,
**dadurch gekennzeichnet,**
**dass** die beiden Seitenflächen (16, 17) jedes Anlagevorsprungs (14) zum Bilden einer Keilspitze (18) unter einem spitzen Winkel von der Grundfläche (15) aus zusammenlaufen, wobei die Keilspitze (18) abgerundet ausgebildet ist.

7. Förderband nach einem der vorangehenden Ansprüche, **dadurch gekennzeichnet,**
**dass** die zur Förderband-Außenseite weisende Seitenfläche (17) jedes Anlagevorsprungs (14) als in etwa zu der zugeordneten Förderplatte (8, 9, 10) senkrecht ausgerichtete Fläche und die zur Förderband-Innenseite weisende Seitenfläche (16) jedes Anlagevorsprungs (14) als zu der zugeordneten Förderplatte (8, 9, 10) schräg in Richtung zur Förderband-Außenseite hin verlaufende Fläche ausgebildet ist.

8. Förderband nach einem der Ansprüche 5 bis 7, **dadurch gekennzeichnet,**
**dass** der Winkel zwischen den beiden zusammenlaufenden Seitenflächen (16, 17) jedes Anlagevorsprungs (14) in etwa zwischen 5° und 20°, vorteilhaft zwischen 10° und 15° beträgt.

9. Förderband nach einem der Ansprüche 6 bis 8, **dadurch gekennzeichnet,**
**dass** die Anlagevorsprünge (14) jeweils von der Grundfläche (15) zu der Keilspitze (18) hin schräg verlaufende Stirnseiten (19) aufweisen derart, dass die Anlagevorsprünge (14) von der Grundfläche (15) zu der Keilspitze (18) verjüngt zulaufend ausgebildet sind.

10. Förderband nach einem der vorangehenden Ansprüche, **dadurch gekennzeichnet,**
**dass** die zur Förderband-Außenseite weisende Seitenfläche (17) jedes Anlagevorsprungs (14) in etwa bündig mit der zugeordneten Stirnseite der zugeordneten Förderplatte (8, 9, 10) ausgebildet ist.

11. Förderband nach einem der vorhergehenden Ansprüche,
**dadurch gekennzeichnet,**
**dass** sich die Anlagevorsprünge (14) jeweils in Förderrichtung annähernd über die gesamte Breite des Trägerabschnitts (12) der zugeordneten Förderplatte (8, 9, 10) erstrecken.

12. Förderband nach einem der vorhergehenden Ansprüche,
**dadurch gekennzeichnet,**
**dass** vorbestimmte Förderplatten (8, 9, 10) Fahrzeugradmitnehmer (11) aufweisen, welche fest oder lösbar auf der jeweils zugeordneten Förderplatte (8, 9, 10) anbringbar sind.

13. Förderband nach einem der vorhergehenden Ansprüche,
**dadurch gekennzeichnet,**
**dass** die Förderplatten (8, 9, 10) und/oder Anlagevorsprünge (14) aus einem geeigneten Kunststoff oder einem Leichtmetall hergestellt sind.

14. Fahrzeugbehandlungsanlage mit einem Förderband (3), welches nach wenigstens einem der Ansprüche 1 bis 13 ausgebildet ist, wobei lediglich ein Förderband (3) zum Bewegen der Fahrzeugräder einer Fahrzeugseite, beispielsweise der linken Fahrzeugseite, vorgesehen ist.

## Claims

1. Conveyor belt (3) for moving vehicles in a vehicle handling facility, in particular a vehicle washing facility, having a plurality of conveyor plates (8, 9, 10) which are disposed one after another in the conveying direction;
wherein at least predetermined conveyor plates (8, 9, 10) have at least one lateral stop projection (14), which extends approximately perpendicular to the longitudinal direction of the conveyor belt and approximately perpendicular to the transverse direction of the conveyor belt, as a vehicle running boundary;
wherein the stop projections (14) are each formed in an approximately wedge-shaped manner with a base surface (15) and two converging side surfaces (16, 17);
wherein each conveyor plate (8, 9, 10) has a carrier portion (12) and connection portions (13) formed thereon for a connection to adjacent conveyor plates; **characterised in that** adjacent stop projections (14) are spaced apart from each other in the conveying direction at least over the width of the connection portions (13) of the corresponding carrier plates (8, 9, 10).

2. Conveyor belt as claimed in claim 1, **characterised in that** the predetermined conveyor plates (8, 9, 10) each have at least one stop projection (14) in both edge regions.

3. Conveyor belt as claimed in claim 1 or 2, **characterised in that** at least in one edge region, preferably in both edge regions, each conveyor plate (8, 9, 10) has at least one, preferably exactly one, stop projection (14) in each case.

4. Conveyor belt as claimed in any one of the preceding claims, **characterised in that** the conveyor plates (8, 9, 10) are each formed as one piece with the correspondingly associated stop projections (14), for example, by means of an injection moulding process.

5. Conveyor belt as claimed in any one of the preceding claims, **characterised in that** the base surface (15) of each stop projection (14) is attached - extending in the longitudinal direction of the conveyor belt - to the respectively associated edge region of the associated conveyor plate (8, 9, 10).

6. Conveyor belt as claimed in any one of the preceding claims, **characterised in that**, starting from the base surface (15), the two side surfaces (16, 17) of each stop projection (14) converge to form a wedge peak (18) at an acute angle, wherein the wedge peak (18) is formed in a rounded manner.

7. Conveyor belt as claimed in any one of the preceding claims, **characterised in that** the side surface (17), facing towards the outer side of the conveyor belt, of each stop projection (14) is formed as a surface oriented approximately perpendicular to the associated conveyor plate (8, 9, 10), and the side surface (16), facing towards the inner side of the conveyor belt, of each stop projection (14) is formed as a surface extending towards the associated conveyor plate (8, 9, 10) inclined in the direction of the outer side of the conveyor belt.

8. Conveyor belt as claimed in any one of claims 5 to 7, **characterised in that** the angle between the two converging side surfaces (16, 17) of each stop projection (14) is approximately between 5° and 20°, advantageously between 10° and 15°.

9. Conveyor belt as claimed in any one of claims 6 to 8, **characterised in that** the stop projections (14) each have end faces (19) extending in an inclined manner from the base surface (15) towards the wedge peak (18), such that the stop projections (14) are formed tapering from the base surface (15) to the wedge peak(18).

10. Conveyor belt as claimed in any one of the preceding claims, **characterised in that** the side surface (17), facing towards the outer side of the conveyor belt, of each stop projection (14) is formed approximately flush with the associated end face of the associated conveyor plate (8, 9, 10).

11. Conveyor belt as claimed in any one of the preceding claims, **characterised in that** the stop projections (14) each extend in the conveying direction approximately over the whole width of the carrier portion (12) of the associated conveyor plate (8, 9, 10).

12. Conveyor belt as claimed in any one of the preceding claims, **characterised in that** predetermined conveyor plates (8, 9, 10) have vehicle wheel carriers (11) which can be fixedly or releasably attached to the respectively associated conveyor plate (8, 9, 10).

13. Conveyor belt as claimed in any one of the preceding claims, **characterised in that** the conveyor plates (8, 9, 10) and/or stop projections (14) are produced from a suitable synthetic material or a light metal.

14. Vehicle handling facility having a conveyor belt (3) which is formed as claimed in at least one of claims 1 to 13, wherein only one conveyor belt (3) is provided to move the vehicle wheels of one vehicle side, for example, the left vehicle side.

## Revendications

1. Bande de transport (3) destinée à déplacer des véhicules automobiles dans une installation de traitement de véhicules, en particulier une installation de lavage de véhicules dotée de plusieurs plaques de transport (8, 9, 10) disposées de manière successive dans le sens du transport ;
au moins deux plaques de transport prédéfinies (8, 9, 10) présentant au moins une partie latérale saillante (14) de l'installation faisant office de limitation de circulation des véhicules s'étendant approximativement verticalement par rapport à la direction longitudinale de la bande de transport et verticalement par rapport à la direction perpendiculaire de la bande de transport ;
les parties saillantes (14) de l'installation ayant approximativement une forme de coin avec une surface de base (15) et deux surfaces latérales se rejoignant (16, 17) ;
chaque plaque de transport (8, 9, 10) présentant une partie support (12) et des parties de liaison (13) y étant formées pour assurer une liaison avec les plaques de transport avoisinantes ;
**caractérisée par le fait que** des parties saillantes (14) avoisinantes de l'installation sont à distance dans la direction de transport les unes des autres sur au moins la largeur des parties de liaison (13) des plaques de support correspondantes (8, 9, 10).

2. Bande de transport selon la revendication 1, **caractérisée par le fait que** les plaques de transport prédéfinies (8, 9, 10) présentent respectivement dans les zones périphériques au moins une partie saillante (14) de l'installation.

3. Bande de transport selon la revendication 1 ou 2, **caractérisée par le fait que** chaque plaque de transport (8, 9, 10) présente au moins dans une zone périphérique, préférentiellement dans les deux zones périphériques, respectivement au moins une, préférentiellement exactement une partie saillante (14) de l'installation.

4. Bande de transport selon l'une des revendications précédentes, **caractérisée par le fait que** les plaques de transport (8, 9, 10) sont formées respectivement en un seul tenant avec les parties saillantes (14) de l'installation associées respectives, par exemple au moyen d'un procédé de moulage par injection.

5. Bande de transport selon l'une des revendications précédentes, **caractérisée par le fait que** la surface de base (15) de chaque partie saillante (14) de l'installation s'étendant dans la direction longitudinale de la bande de transport est mise en place sur la zone périphérique respectivement associée de la plaque de transport associée (8, 9, 10).

6. Bande de transport selon l'une des revendications précédentes, **caractérisée par le fait que** les deux surfaces latérales (16, 17) de chaque partie saillante (14) de l'installation se rejoignent pour la formation d'un coin (18) en un angle aigu à partir de la surface de base (15), le coin (18) étant formé de manière arrondie.

7. Bande de transport selon l'une des revendications précédentes, **caractérisée par le fait que** la surface latérale (17) de chaque partie saillante (14) de l'installation orientée vers la partie extérieure de la bande de transport est formée comme la surface dirigée perpendiculairement à la plaque de transport (8, 9, 10) associée et la surface latérale (16) de chaque partie saillante (14) de l'installation orientée vers la partie intérieure de la bande de transport est formée comme la surface associée à la plaque de transport (8, 9, 10) s'étendant en diagonale dans la direction de la face extérieure de la bande de transport.

8. Bande de transport selon l'une des revendications 5 à 7, **caractérisée par le fait que** l'angle entre les deux surfaces latérales (16, 17) se rejoignant de chaque partie saillante (14) de l'installation étant approximativement situé entre 5° et 20°, préférentiellement entre 10° et 15°.

9. Bande de transport selon l'une des revendications 6 à 8, **caractérisée par le fait que** les parties saillantes (14) de l'installation présentent respectivement des faces frontales (19) s'étendant obliquement de la surface de base (15) au coin (18) de telle sorte que les parties saillantes (14) de l'installation sont formées dans une extension allant en diminuant de la surface de base (15) au coin (18.

10. Bande de transport selon l'une des revendications précédentes, **caractérisée par le fait que** la surface latérale orientée vers la partie extérieure de la bande de transport (17) de chaque partie saillante (14) est formée approximativement à fleur avec la face frontale associée de la plaque de transport associée (8, 9, 10).

11. Bande de transport selon l'une des revendications précédentes, **caractérisée par le fait que** les parties saillantes (14) de l'installation s'étendent respectivement dans la direction de transport approximativement sur la totalité de la largeur de la partie support (12) de la plaque de transport associée (8, 9, 10).

12. Bande de transport selon l'une des revendications précédentes, **caractérisée par le fait que** des plaques de transport prédéfinies (8, 9, 10) présentent des entraîneurs de roues de véhicule (11), qui peuvent être mis en place de manière fixe ou amovible sur la plaque de transport respectivement associée (8, 9, 10).

13. Bande de transport selon l'une des revendications précédentes, **caractérisée par le fait que** les plaques de transport (8, 9, 10) et/ou les parties saillantes (14) de l'installation sont constituées d'une matière plastique ou d'un métal léger.

14. Installation de traitement de véhicules dotée d'une bande de transport (3), formée selon au moins l'une des revendications 1 à 13, seule une bande de transport (3) étant prévue pour déplacer les roues de véhicule d'un côté du véhicule, par ex. le côté gauche du véhicule.
